(19) Europäisches Patentamt
European Patent Office
Office européen des brevets

(11) **EP 3 395 925 B1**

(12) **EUROPEAN PATENT SPECIFICATION**

(45) Date of publication and mention of the grant of the patent:
**09.12.2020 Bulletin 2020/50**

(21) Application number: **16878099.7**

(22) Date of filing: **04.10.2016**

(51) Int Cl.:
*C09K 3/00* *(2006.01)*        *B01J 13/14* *(2006.01)*
*C08J 9/32* *(2006.01)*

(86) International application number:
**PCT/JP2016/079529**

(87) International publication number:
**WO 2017/110201 (29.06.2017 Gazette 2017/26)**

(54) **MICROSPHERE, THERMALLY FOAMABLE RESIN COMPOSITION COMPRISING SAID MICROSPHERE, STRUCTURE MEMBER, MOLDED BODY, AND METHOD FOR MANUFACTURING SAID STRUCTURE MEMBER AND SAID MOLDED BODY**

MIKROKUGEL, THERMISCH AUFSCHÄUMBARE HARZZUSAMMENSETZUNGEN MIT DIESER MIKROKUGEL, STRUKTURELEMENT, FORMKÖRPER UND VERFAHREN ZUR HERSTELLUNG DES BESAGTEN STRUKTURELEMENTS UND DES BESAGTEN FORMKÖRPERS

MICROSPHÈRE, COMPOSITION DE RÉSINE THERMIQUEMENT EXPANSIBLE COMPRENANT LADITE MICROSPHÈRE, ÉLÉMENT DE STRUCTURE, CORPS MOULÉ ET PROCÉDÉ DE FABRICATION DUDIT ÉLÉMENT DE STRUCTURE ET DUDIT CORPS MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2015 JP 2015248194**

(43) Date of publication of application:
**31.10.2018 Bulletin 2018/44**

(73) Proprietor: **Kureha Corporation**
**Chuo-ku**
**Tokyo 103-8552 (JP)**

(72) Inventors:
• **SUZUKI, Yasuhiro**
**Tokyo 103-8552 (JP)**

• **NOMURA, Shintaro**
**Tokyo 103-8552 (JP)**
• **ENDO, Shunzo**
**Tokyo 103-8552 (JP)**

(74) Representative: **BRP Renaud & Partner mbB**
**Rechtsanwälte Patentanwälte**
**Steuerberater**
**Königstraße 28**
**70173 Stuttgart (DE)**

(56) References cited:
**EP-A1- 2 204 428          WO-A1-2006/030946**
**WO-A1-2007/072769     WO-A1-2015/178329**
**WO-A2-2013/178561     JP-A- 2012 513 487**
**JP-A- 2015 523 908        US-A1- 2012 064 347**
**US-B2- 8 754 141**

**Description**

Technical Field

The present invention relates to a microsphere, a heat-expandable resin composition comprising said microsphere, a structure member, a molded article, and a method for manufacturing said structure member and said molded article.

Background Art

Microspheres, which are also known as microcapsules, have an outer shell that micro-encapsulates a volatile foaming agent. Microspheres have a property wherein when heated, the microspheres rapidly expand at the foaming initiation temperature.

In the related art, microspheres having an average particle size of less than 50 $\mu$m have mainly been developed. However, from the point of view of further development of applications for microspheres and lightening of the molded article, presently microspheres with an average particle size of 50 $\mu$m or greater are being developed (see Patent Literature 1, Patent Literature 2, and Patent Literature 3).

Microspheres are sometimes used by being kneaded and mixed with a polymeric material (base material) including a synthetic resin, rubber, and the like. Further, microspheres are not directly kneaded and mixed with the polymeric material serving as a base material, but are kneaded and mixed into a low melting point thermoplastic resin in advance to create a masterbatch; wherein, there are cases in which the master batch is then added to the polymeric material and kneaded and mixed therein directly before molding. Accordingly, in a case where the foaming initiation temperature of the foaming agent is low, there is a risk that the microspheres will start to foam during the process of being kneaded and mixed with the polymeric material and thermoplastic resin. Therefore, the processing temperature be made low, and limits the types of polymeric materials and thermoplastic resins that can be used.

Further, in a case where microspheres are heated to a temperature at or above the foaming initiation temperature, the microspheres foam and become foamed particles. However, in a case where the microspheres are further heated, the thickness of the outer shell becomes thin, and the foaming agent passes through the shell. When that happens, the pressure within the foamed particle decreases and the size of the foamed particles shrinks as a result, bringing about so-called deflation.

Therefore, in addition to the obvious demand for microspheres that have a large expansion ratio, there is presently a demand for microspheres that have a high foaming initiation temperature and which are not easily subject to deflation.

Citation List

Patent Literature

Patent Literature 1: JP 2013-212432 A (published October 17, 2013)

Patent Literature 2: WO 2006/030946 A1 (published March 23, 2016)

Patent Literature 3: WO2013/178561 A2 (published December 5, 2013)

Summary of Invention

Technical Problem

In response to this demand, with respect to a microsphere that has an average particle size of less than 50 $\mu$m, by changing the type of a polymerizable monomer or adding a crosslinkable monomer, a microsphere that has a high foaming initiation temperature and is not easily subject to deflation has been successfully developed.

Microspheres are generally prepared by using suspension polymerization. At that time, the particle size can be changed by adjusting the emulsification conditions at the time of suspension polymerization. Here, among the conditions for manufacturing a microsphere having a large expansion ratio, a high foaming initiation temperature, an average particle size of less than 50 $\mu$m, a high foaming initiation temperature and is not easily subject to occurrence deflation, it is also considered that in a case where only the emulsification conditions of the suspension polymerization are adjusted, a microsphere having a large expansion ratio, a high foaming initiation temperature, an average particle size of equal to or greater than 60 $\mu$m, a high foaming initiation temperature and is not easily subject to deflation can be obtained.

However, in a case where the particle size of the microsphere is simply changed by adjusting only the emulsification conditions of the suspension polymerization, the expansion ratio of the microspheres may decrease, the foaming initiation temperature may fall, or the microsphere may be subject to occurrence of deflation.

Accordingly, with respect to a microsphere that has an average particle size 50 $\mu$m or greater, the present state of affairs is such that a microsphere with a high foaming initiation temperature and is not easily subject to occurrence of deflation has not been obtained.

The present invention has been developed to solve the above-described problems. That is to say, with respect to the case of a microsphere with a particle size of equal to or greater than 60 $\mu$m, and equal to or less than 120 $\mu$m, it is an object of the present invention to provide a microsphere that has a high expansion ratio, a high foaming initiation temperature and is not easily subject to occurrence of deflation, a heat-expandable resin composition including said microsphere, a structure member, a molded article, and a method for manufacturing said structure member and said molded article.

Solution to Problem

The inventors of the present invention, as a result of their earnest research, have found, surprisingly, that the optimal amount of foaming agent to be contained in a microsphere is dependent on the average particle size of the microsphere. Further, by optimizing the amount of foaming agent according to the particle size, the inventors of the present invention found a method to obtain a microsphere that has a large expansion ratio, a high foaming initiation temperature, and which is difficult to be subject to deflation even when the average particle size is equal to or greater than 60 $\mu$m, and equal to or less than 120 $\mu$m, thereby arriving at the present invention, as defined by claims 1 to 11.

According to an aspect of the present invention, provided is a microsphere including an outer shell and a foaming agent sealed into said outer shell, wherein: said foaming agent includes a compound that vaporizes and becomes a gas upon being heated, when said microsphere has an average particle size (D50) of A ($\mu$m), the amount of said foaming agent for said microsphere is B1 (mass%), relationships in Relationships (1), (2), and (3) are satisfied:

$$\text{Relationship (1):} \quad 60 \leq A \leq 120$$

$$\text{Relationship (2):} \quad B1 \leq -0.14 \times A + 33$$

$$\text{Relationship (3):} \quad -0.14 \times A + 27 \leq B1,$$

wherein a density of foamed particles produced when the microspheres are caused to foam is 0.024 g/ml or less.

According to another aspect of the present invention, provided is a microsphere including an outer shell and a foaming agent sealed into said outer shell, wherein: said outer shell includes a polymer of a monomer including a polymerizable monomer; said foaming agent includes a compound that vaporizes and becomes a gas upon being heated, when said microsphere has an average particle size (D50) of A ($\mu$m), the amount of the foaming agent for said microsphere is B2 (parts by mass), relationships in Relationships (4), (5) and (6) are satisfied:

$$\text{Relationship (4):} \quad 60 \leq A \leq 120$$

$$\text{Relationship (5):} \quad B2 \leq -0.22 \times A + 43$$

$$\text{Relationship (6):} \quad -0.22 \times A + 39 \leq B2$$

where, B2 represents the parts by mass of the foaming agent when the parts by mass of the polymerizable monomer is 100 and wherein a density of foamed particles produced when the microspheres are caused to foam is 0.024 g/ml or less.

Advantageous Effects of Invention

According to an aspect and another aspect of the present invention, because the amount of foaming agent has been optimized for the particle size, the inventors of the present invention found a method to obtain a microsphere having a large expansion ratio, a high foaming initiation temperature, and which is difficult to be subject to deflation even when the average particle size is equal to or greater than 60 $\mu$m, equal to or less than 120 $\mu$m.

Brief Description of the Drawings

FIG. 1 is a graph showing the relationship of the amount of foaming agent (actual) with respect to particle size of microspheres related to an example and a comparative example.
FIG. 2 is a graph showing the relationship of the amount of foaming agent (amount of charge) with respect to particle size of microspheres related to an example and a comparative example.

Description of Embodiments

The present invention will be described more fully hereinafter in a detailed description of an embodiment of a microsphere, a heat-expandable resin composition including said microsphere, a structure member, a molded article, and a method for manufacturing said structure member and said molded article according to the present invention.

Microspheres

Microspheres include an outer shell, and a foaming agent sealed into the outer shell. The outer shell, in so far as it is configured of a material capable of having sealed thereinto a foaming agent, is not particularly limited, but is preferably, for example, configured of a polymer of a monomer including a polymerizable monomer. The foaming agent includes a compound that vaporizes at a temperature less than or equal to the softening temperature of the material configuring the outer shell (e.g., the above-described polymer).

When the microsphere has an average particle size (D50) of A ($\mu$m), and the amount of foaming agent for said microsphere is B1 (mass%), the microsphere of the present embodiment satisfies the relationships in Relationships (1) and (2). Here, because the microsphere includes a foaming agent, it is a matter of course that the mass% of B1 is a value higher than 0.

$$\text{Relationship (1):} \quad 60 \leq A \leq 120$$

$$\text{Relationship (2):} \quad B1 \leq -0.14 \times A + 33$$

As described above, the optimal amount of foaming agent to be contained in a microsphere is dependent on the average particle size of the microsphere. Relationship (2) expresses that relationship. Relationship (2) is a relationship that was derived on the basis of experimentation. When the value of B1 satisfies the Relationship (2), the amount of foaming agent in the microsphere becomes optimal. Therefore, for the reasons described below, it becomes possible to avoid the possibility of the foaming initiation temperature of the microsphere becoming low, the deflation phenomenon easily occurring, and the expansion ratio becoming small.

It is further required that the above-described microsphere further satisfies the relationship expressed in Relationship (3) below. When the value of B1 satisfies the relationship expressed in Relationship (3) below, the amount of foaming agent in the microsphere becomes an even more optimal value; therefore, the expansion ratio of the microsphere can be made even larger.

$$\text{Relationship (3):} \quad -0.14 \times A + 27 \leq B1$$

The average microsphere particle size A is the median size of a microsphere particle distribution measured with a particle size analysis apparatus (Sysmex Corporation, Product Number: "FPIA-3000"). The lower limit of the average microsphere particle size A is $\mu$m or greater. The upper limit of the average microsphere particle size A is 120 $\mu$m or less, and more

preferably 100 μm or less.

The amount of foaming agent B1 inside the outer shell of the microsphere can be measured using a gas chromatograph (Shimadzu Corporation, Product Name: "GC-14B"). Specifically, in a case where the microsphere is swelled with N,N-dimethylformamide (DMF), the supernatant fluid of that liquid can be measured by carrying out gas chromatography to derive the amount of foaming agent within the microsphere.

The above description indicates that the amount of foaming agent contained in a microsphere can be ascertained by direct measurement, however, it is also possible to ascertain from the amount of charge of foaming agent. In this case, when the microsphere average particle size (D50) is A (μm), and the amount of foaming agent is B2 (parts by mass), the microsphere satisfies the relationships in Relationships (4) and (5) below. Here, because the microsphere includes a foaming agent, it is a matter of course that the parts by mass of B2 is a value higher than 0.

$$\text{Relationship (4):} \quad 60 \leq A \leq 120$$

$$\text{Relationship (5): } B2 \leq -0.22 \times A + 43$$

In Relationship (5), B2 represents the mass portion of the foaming agent when the parts by mass of the polymerizable monomer is 100.

As described above, the optimal amount of foaming agent to be contained in a microsphere is dependent on the average particle size of the microsphere. Relationship (5) expresses that relationship in terms of the amount of charge of foaming agent. Relationship (5) is a relationship that was derived on the basis of experimentation. When the value of B2 satisfies Relationship (5), the amount of foaming agent in the microsphere becomes optimal. Therefore, for the reasons described below, it becomes possible to avoid the possibility of the foaming initiation temperature of the microsphere becoming low, the deflation phenomenon easily occurring, and the expansion ratio becoming small. Here, because the preferred range and measurement method of the average particle size A in Relationship (4) above is the same as for that in the case of the average particle size A in Relationship (1), explanation thereof is omitted here.

It is further required that the above-described microsphere further satisfies the relationship expressed in Relationship (6) below. When the value of B2 satisfies the relationship expressed Relationship (6) below, the amount of foaming agent in the microsphere becomes an even more optimal value; therefore, the expansion ratio of the microsphere can be made even larger.

$$\text{Relationship (6): } -0.22 \times A + 39 \leq B2$$

Microspheres foam (expand) at a temperature higher than or equal to the foaming initiation temperature. When the microspheres are heated, the foaming agent vaporizes and expansion force is applied to the outer shell and, at the same time, the elastic modulus of the polymer constituting the outer shell decreases rapidly, thereby causing rapid expansion at a certain temperature. According to the present specification, this temperature at which the rapid expansion occurs is referred to as the foaming initiation temperature. Specifically, the foaming initiation temperature is the temperature at which the height of the microspheres begins to be displaced, as determined by using 0.25 mg of microspheres, raising the temperature thereof at a temperature increasing speed of 5°C/min, and continuously measure the displacement of the height thereof. Here, in this specification, if not mentioned in particular, "microsphere foaming initiation temperature" refers to the foaming initiation temperature of non heat-treated microspheres.

It is preferable that the foaming initiation temperature is 200°C or higher. By having a microsphere foaming initiation temperature of 200°C or higher, it becomes possible to raise the processing temperature when subjecting the polymeric material or thermoplastic resin to mixing and kneading processing, whereby the range of types of polymeric materials or thermoplastic resins that can be selected becomes broader. It is more preferable that the microsphere foaming initiation temperature is 210°C or higher, and most preferably 220°C or higher.

The foamed particle density at the time the microspheres are caused to foam is 0.024 g/ml or less, and more preferably 0.022 g/ml or less. Here, "foamed particle density" refers to the true density of foamed particles when microspheres have been caused to foam by being subjected to a heat treatment at 200°C for 5 minutes after having been subjected to a heat treatment at 150°C for 5 minutes. As the foamed particle density measured under the above-described conditions is at least 0.024 g/ml or less, it can be said that the expansion ratio of the microspheres is large. Here, in this specification, "foamed particle" refers to the microspheres during foaming or after foaming.

When the density of the foamed particles obtained by subjecting the microspheres to a heat treatment at 200°C for 5 mi nutes after having subj ected the mi crospheres to a heat treatment at 150°C for 5 minutes is R1, and the density of the foamed particles obtained by subjecting the microspheres to a heat treatment at 150°C for 5 minutes after having subjected the microspheres to a heat treatment at 190°C for 5 minutes is R2, it is preferable that the microspheres satisfy the relationship in Relationship (7) below.

$$\text{Relationship (7): R1/R2} \leq 1.3$$

Here, R1/R2 can be used as an index of the degree of deflation of the microspheres. Specifically, in a case where R1/R2 < 1, the expansion ratio of the foamed particles caused to foam by heating at 200°C becomes larger than that of the foamed particles caused to foam by heating at 190°C. In addition,in a case where R1/R2 = 1, the expansion ratio of the foamed particles caused to foam by heating at 200°C becomes the same as that of the foamed particles caused to foam by heating at 190°C. This means that in either case, deflationhas not occurred in the microspheres. Meanwhile, in a case where R1/R2 > 1, the expansion ratio of the foamed particles caused to foam by heating at 200°C becomes smaller than that of the foamed particles caused to foam by heating at 190°C, and this means that deflation has occurred in the microspheres. Accordingly, by satisfying the conditions of Relationship (7) above, the microspheres treated at 200°C can be said to not have been subject to deflation, or to have for the most part not been subjected to deflation.

Outer shell

The outer shell can be formed by a polymer of a monomer including a polymerizable monomer, as described above. The monomer is a monomer for forming the outer shell, and it is preferable that the monomer include a polymerizable monomer, or a crosslinkable monomer. The foaming characteristics and heat resistance of the monomer can be improved by including a polymerizable monomer or a crosslinkable monomer therein. The foaming initiation temperature of the microspheres that are formed tends to be higher the higher content of (meth)acrylonitrile in the outer shell. Accordingly, from the standpoint of raising the foaming initiation temperature of the microsphere, it is preferable that the outer shell is a polymer of which the main component thereof is (meth)acrylonitrile.

Polymerizable monomer

The polymerizable monomer is a compound having one carbon-carbon double bond (-C=C-). Examples of the carbon-carbon double bonds include vinyl groups, (meth)acryloyl, and allyl groups. The polymerizable monomer is not particularly limited, but preferably contains at least one type of monomer selected from the group consisting of acrylonitrile and methacrylonitrile (this monomer may be generally called "(meth)acrylonitrile") and/or vinylidene chloride from the perspective of ensuring that the outer shell of the polymer has gas barrier properties, solvent resistance, and heat resistance and that a polymer having good foamability as well as foamability at high temperatures can be produced as desired.

In addition to the polymerizable monomers (meth)acrylonitrile and vinylidene chloride, other polymerizable monomers may also be added. Polymerizable monomers other than (meth)acrylonitrile and/or vinylidene chloride are not particularly limited, and examples thereof include acrylic acid esters such as methyl acrylate, ethyl acrylate, butyl acrylate, and dicyclopentenyl acrylate; methacrylic acid esters such as methyl methacrylate, ethyl methacrylate, butyl methacrylate, and isobornyl methacrylate; acrylic acids, (meth)acrylic acids, vinyl chloride, styrene, vinyl acetate, $\alpha$-methylstyrene, chloroprene, neoprene, and butadiene.

When the polymerizable monomer includes (meth)acrylonitrile, it is preferable that the polymerizable monomer includes only (meth)acrylonitrile, or that it include (meth)acrylonitrile and at least one monomer from the group including vinylidene chloride, (meth)acrylic ester, styrene and vinyl acetate (hereinafter sometimes referred to as, "specified monomers other than (meth)acrylonitrile"), and more preferably is formed only from (meth)acrylonitrile and the above-described specified polymerizable monomers other than (meth)acrylonitrile. As described above, the foaming temperature of the microspheres that are formed tends to be higher when the (meth)acrylonitrile content ratio of the polymer monomer containing (meth)acrylonitrile is higher. In addition, the foaming temperature, the maximum expansion ratio (calculated with a conventional method as the (volume of foamed particles)/(volume of microspheres)), or the like of the microspheres that are formed can also be adjusted based on the types and compositions of specified monomers other than (meth)acrylonitrile. Therefore, the desired microspheres can be formed by adjusting the ratio of (meth)acrylonitrile and monomers other than (meth)acrylonitrile, and the types and compositions of specified monomers other than (meth)acrylonitrile.

When the polymerizable monomer contains (meth)acrylonitrile and specified monomers other than (meth)acrylonitrile, it is preferable that the amount of (meth)acrylonitrile contained is 25 mass% or greater and less than 100 mass%, more preferably 25 mass% or greater and 99.5 mass% or less, and even more preferably 30 mass% or greater and 99 mass% or less. Further, in this case, the amount of specified monomers other than (meth)acrylonitrile contained is preferably 0 mass% or greater and 75 mass% or less, is preferably 0.5 mass% or greater and 75 mass% or less, and even more preferably 1 mass% or greater and 70 mass% or less. Note that, in this case, the total mass% of (meth)acrylonitrile and specified monomers other than (meth)acrylonitrile is 100 mass%.

With regard to specified monomers other than (meth)acrylonitrile, methyl methacrylate is particularly preferable. When the content ratio of (meth)acrylonitrile is too low, the foaming temperature of the microspheres that are formed may be low, or the gas barrier properties may be insufficient.

When the polymerizable monomer contains vinylidene chloride, the polymerizable monomer preferably contains vinylidene chloride, and at least one type of monomer selected from the group consisting of (meth)acrylonitrile, (meth)acrylate, styrene, and vinyl acetate (also called "monomers other than vinylidene chloride" hereafter). When vinylidene chloride is contained, the gas barrier properties of the microspheres that are formed tend to be higher when the vinylidene chloride content ratio is higher, and the gas barrier properties of the microspheres that are formed tend to be lower when the content ratio is lower. In addition, the foaming initiation temperature, the maximum expansion ratio, or the like of the microspheres that are formed can also be adjusted based on the types and compositions of monomers other than vinylidene chloride. Therefore, the desired microspheres can be formed by adjusting the ratio of vinylidene chloride and specified monomers other than vinylidene chloride and the types and compositions of specified monomers other than vinylidene chloride.

When the polymerizable monomer contains vinylidene chloride and specified monomers other than vinylidene chloride, it is preferable that the amount of vinylidene chloride contained is 30 mass% or greater and 95 mass% or less, preferable that the amount of vinylidene chloride contained is 35 mass% or greater and 90 mass% or less, and even more preferable is 40 mass% or greater and 80 mass% or less. Further, in this case, the amount of specified monomers other than vinylidene chloride contained is preferably 5 mass% or greater and 70 mass% or less, is preferably 10 mass% or greater and 65 mass% or less, and even more preferably 20 mass% or greater and 60 mass% or less. Note that, in this case, the total mass% of vinylidene chloride and specified monomers other than vinylidene chloride is 100 mass%.

Regarding specified monomers other than vinylidene chloride, (meth)acrylonitrile and methyl methacrylate are preferable. When the polymerizable monomer contains vinylidene chloride, 20 to 50 mass% (meth)acrylonitrile, and methyl methacrylate, it is preferable that vinylidene chloride is 45 to 75 mass%, (meth)acrylonitrile is 20 to 50 mass%, and methyl methacrylate is 3 to 10 mass% (total amount is 100 mass%). When the content ratio of vinylidene chloride is in the above-described range, the gas barrier properties of the microspheres that are formed are adequate, and preferable with respect to the point of obtaining the desired maximum expansion ratio.

It is preferable that the polymerizable monomer does not contain a monomer including a carboxyl group. In this case, the polymerizable monomer having a carboxyl group can include methacrylic acid, acrylic acid, maleic acid, maleic anhydride, and itaconic acid. With regard to the polymerizable monomer, when a monomer having a carboxyl group, in particular when a methacrylic acid is used, the heat resistance of the outer shell can be improved. Meanwhile, when the polymerizable monomer does not include a monomer including a carboxyl group, the effect of the present invention is adequately expressed, and the dispersion of the polymerizable mixture (oil phase) during polymerization becomes stable. Further, in that case, aside from oil droplets, abnormal polymerization occurs in an aqueous dispersion media; furthermore, during the formation of the molded article included in the foaming process, possibility of encountering a multitude of deflation is low. Therefore, there are no limitations on the manufacturing conditions of the molded article, and the thermal stability is improved. Further, when the polymerizable monomer does not include a monomer including a carboxyl group, even under conditions of high humidity, the foamability does not decrease. Accordingly, in that case, possibility that the application of the microspheres will be limited is low. Note that, when the polymerizable monomer includes a monomer that has a carboxyl group, there are cases in which foamability may be decreased under conditions of high humidity; however, this is due to the gas barrier properties of the outer shell, and this is because there is a possibility that the carboxyl group may cause a decrease in the gas barrier properties under conditions where there is a portion of water.

Crosslinkable monomer

A compound having two or more carbon-carbon double bonds is ordinarily used as a crosslinkable monomer. Examples of the crosslinkable monomers, for example, include divinylbenzene, ethylene glycol di(meth)acrylate [ethylene glycol di(meth)acrylate], diethylene glycol di(meth)acrylate (diethylene glycol di(meth)acrylate), triethylene glycol di(meth)acrylate, allyl (meth)acrylate, triallyl isocyanurate, triacrylformal, trimethylolpropane tri(meth)acrylate, 1,3-butylglycol di(meth)acrylate, pentaerythritol tri(meth)acrylate, and pentaerythritol tetra(meth)acrylate. Further, in this case, it is preferable that the amount of crosslinkable monomer contained with respect to the total amount of the polymerizable monomer is preferably 0.01 mass% or greater and 5 mass% or less, is preferably 0.02 mass% or greater and 3 mass% or less, and even more preferably 0.03 mass% or greater and 2 mass% or less.

Foaming agent

The foaming agent is a substance that vaporizes upon being heated. As the foaming agent, a hydrocarbon having a boiling point corresponding to the foaming initiation temperature or the like can be used. As the foaming agent, for example, hydrocarbons such as ethane, ethylene, propane, propene, n-butane, isobutane, butene, isobutene, n-pentane, isopentane, neopentane, n-hexane, heptane, n-octane, isooctane, isododecane, petroleum ethers, and isoparaffin mixtures; chlorofluorocarbons such as $CCl_3F$, $CCl_2F2$, $CClF_3$, and $CClF_2$-$CClF_2$; and tetraalkylsilanes such as tetramethylsilane, trimethylethylsilane, trimethylisopropylsilane, and trimethyl-n-propylsilane can be used. These can be used alone, or two or more types thereof can be combined for use. Among these, isobutane, n-butane, n-pentane, isopentane, n-hexane, isooctane, isododecane, petroleum ethers, as well as mixtures of two or more types thereof are preferable. In addition, a compound which undergoes thermolysis and becomes a gas when heated may also be used as the foaming agent, as desired.

Method of producing microspheres

The above-described microspheres may be produced by, for example, performing suspension polymerization on a polymerizable mixture containing at least a foaming agent and a polymerizable monomer in an aqueous dispersion medium containing a dispersion stabilizer.

Aqueous dispersion medium

Water may be used as an aqueous dispersion medium; specifically, deionized water and distilled water may be used. The amount of the aqueous dispersion medium that is used with respect to the total amount of the polymerizable monomer is not particularly limited but is ordinarily from 0.5 to 30 times and in many cases from 1 to 10 times (mass ratio).

Dispersion stabilizer

Examples of dispersion stabilizers include silica such as colloidal silica, calcium phosphate, magnesium hydroxide, aluminum hydroxide, ferric hydroxide, barium sulfate, calcium sulfate, sodium sulfate, calcium oxalate, calcium carbonate, barium carbonate, and magnesium carbonate. The dispersion stabilizer is ordinarily used at a ratio from 0.1 parts by mass or greater to 20 parts by mass or less per 100 parts by mass of the total amount of the polymerizable monomer.

Other additives

Aside from a dispersion stabilizer, a co-stabilizer, such as a condensation product of diethanolamine and aliphatic dicarboxylic acid, may be added to the aqueous dispersion medium. When colloidal silica is used as the dispersion stabilizer, it is preferable that a condensation product of diethanolamine and aliphatic dicarboxylic acid is used as the co-stabilizer.

Aside from a dispersion stabilizer, a co-stabilizer, at least one type of compound selected from the group consisting of alkali nitrite metal salts, stannous chloride, stannic chloride, water-soluble ascorbic acids, and boric acid may be added to the aqueous dispersion medium. When suspension polymerization is performed in the presence of these compounds, aggregation of polymer particles does not occur. Further, the polymer does not adhere to the walls of the polymerization vessel. Therefore, microspheres can be stably produced while heat build-up due to polymerization is efficiently eliminated. Among alkali metal nitrite salts, sodium nitrite or potassium nitrite is preferable from the perspective of the cost or ease of procurement. These compounds are ordinarily used at a ratio from 0.001 part by mass or greater to 1 part by mass or less, and preferably 0.01 part by mass or greater to 0.1 parts by mass or less per 100 parts by mass of the total amount of the polymerizable monomer.

Aside from a dispersion stabilizer, a polymerization initiator such as a dialkyl peroxide, a diacyl peroxide, a dialkyl peroxydicarbonate, an azo compound, and the like, may be added to the aqueous dispersion medium. The polymerization initiator is ordinarily used at a ratio from 0.0001 mass% or greater to 3 mass% or less on the basis of the aqueous dispersion medium.

In suspension polymerization, the optimal pH conditions are preferably selected in accordance with the type of dispersion stabilizer and auxiliary stabilizer that is used. For example, when a silica such as colloidal silica is used as a dispersion stabilizer, polymerization is preferably performed in an acidic environment, for example, the pH of the system can be adjusted to approximately 3 to 4 by adding an acid to the aqueous dispersion medium containing a dispersion stabilizer. In addition, when magnesium hydroxide or calcium phosphate is used as a dispersion stabilizer, it is preferable that polymerization is performed in an alkaline environment.

In suspension polymerization, the foaming agent and monomer for forming the outer shell are added to the aqueous dispersion medium containing a dispersion stabilizer and stirred and mixed. The foaming agent and monomer for forming the outer shell form liquid droplets in the form of an oil phase, so these can be mixed while stirring so as to be granulated into fine liquid droplets of a desired size. Here, considering the average particle size of the microspheres to be formed, the foaming agent should be added in an amount so as to satisfy the conditions of Relationship (5) above.

At the time of stirring and mixing, conditions such as the type and revolution speed of the stirrer are set in accordance with the desired particle size of the microspheres. At this time, the conditions are selected taking into consideration the size and shape of the reaction vessel, the presence or absence of a baffle, and the like. Regarding the stirrer, it is preferable that a homogenizer with a high shearing force is used therefor.

Then the obtained dispersion liquid is poured into the reaction vessel, after which the suspension polymerization carried out in the reaction vessel. Suspension polymerization is carried out with the temperature in the reaction vessel at 40 to 80°C for 5 to 50 minutes while stirring. The microspheres produced by polymerization form an oil phase (solid phase), so an aqueous phase containing the aqueous dispersion medium is separated and removed from the microspheres by a separation method which is itself known, such as filtration. Finally, the obtained microspheres are dried at a relatively low temperature at which the foaming agent is not gasified, as necessary.

According to the present embodiment, because the microspheres satisfy Relationships (1) and (2) above, or Relationships (4) and (5) above, the microspheres have a large expansion ratio, a high foaming initiation temperature, and are difficult to be subject to deflation.

That is to say, for microspheres with an average particle size of 50 $\mu$m or greater, the following are thought to be the causes why the expansion ratio becomes small, the foaming initiation temperature becomes low, or deflation easily occurs. In a case where the amount of foaming agent inside microspheres is excessive with respect to the average particle size of the microspheres, the excess portion causes the thickness of the outer shell to become thin, and at the time of foaming, heat expansion of the foaming agent causes the outer shell to become even thinner, as a result of which the foaming agent passes through the outer shell, causing deflation of the microspheres and a decrease in the expansion ratio of the microspheres. Further, in a case where the amount of foaming agent inside microspheres is excessive with respect to the average particle size of the microspheres, though it depends on the extent to which there is excessive foaming agent, when heated, the pressure within the microspheres becomes too high, wherefore the foaming initiation temperature falls.

Therefore, according to the present embodiment, because the microspheres satisfy Relationships (1) and (2) above, or Relationships (4) and (5) above, the amount of foaming agent contained in the microspheres is optimized for the average particle size thereof. By optimizing the amount of foaming agent contained in the microspheres for the average particle size thereof, because the outer shell does not become excessively thin and the passing of the foaming agent through the outer wall at the time of foaming can be controlled, the occurrence of deflation can be controlled and the expansion ratio becomes large. Further, because the amount of foaming agent inside microspheres is optimized for the average particle size of the microspheres, when heated, the pressure within the microspheres does not become too high, and the falling of the foaming initiation temperature can be controlled. For the above reasons, the microspheres according to the current embodiment have a large expansion ratio, a high foaming initiation temperature, and are difficult to be subject to deflation.

Heat-expandable resin composition, structure and molded article

Utilizing the expandability of the microspheres according to the current embodiment, the microspheres can be used, for example, as a filler for automotive paints, wall paper, foam ink (for applying relief patterns on t-shirts, and the like), and contraction preventing agent, but according to the application, said microspheres can also be used in compositions combining other materials or as a structural component.

Specifically, the microspheres according to the current embodiment can be used in the form of a heat-expandable resin composition obtained by melting a thermoplastic resin and kneading the microspheres thereinto. This heat-expandable resin composition can be pelletized and added to the materials described below for use as a masterbatch.

The thermoplastic resins described above are not particularly limited, and may be a common thermoplastic resin such as polyvinyl chloride, polystyrene, polypropylene, polypropylene oxide, polyethylene, and the like. Further, as the thermoplastic resin, an ethylene-, vinyl chloride-, olefin-, urethane-, ester-type, and the like, thermoplastic resin may be used, and these resins may also be used together.

The microspheres according to the present embodiment can also be used in the form of a structure component provided in the material thereof, which includes and at least either of a polymer and a fiber, with the microspheres.

The polymer may be, for example, a polyethylene (PE), polypropylene (PP), polystyrene (PS), polyamide (PA), polyethylene terephthalate (PET), polybutylene terephthalate (PBT), polyphenylene sulfide (PPS), ABS (acrylic styrene butadiene) resin, styrene•butadyne•styrene block copolymer (SBS), styrene-isoprene block copolymer (SIS), hydrogenated SIS, natural rubber, various types of synthetic rubber, and thermoplastic polyurethane, and the like, but is not limited thereto.

The fiber may be, for example, glass fibers, kenaf, carbon fibers, and the like. Such types of fibers do not themselves have a function for holding air, so it is preferable to use them with microspheres, which are independent pneumatophores.

When manufacturing the above-described structure component, with the microspheres in the state provided inside the material, it is preferable that the microspheres be subjected to a heat treatment at a temperature below than the foaming initiation temperature (e.g., 150°C). Because it is possible to maintain the foaming initiation temperature of the microspheres in a high state until the microspheres are incorporated into the material, a variety of materials can be used as the material. The heat treatment includes the drying step and forming step (e.g., masterbatch step, heat-pressing step, rolling processing, and the like) at the time of manufacturing the structure component. Meanwhile, after the microspheres have been incorporated into the material, by subjecting the microspheres to heat treatment at a temperature below the foaming initiation temperature thereof, the foaming initiation temperature of the heat-treated microspheres becomes lower compared to that of the non heat-treated microspheres. Therefore, a variety of materials can be used as the material, and when manufacturing a molded article, the microspheres can be caused to foam with a smaller amount of heat.

The microspheres according to the current embodiment can be mixed in structure components and paints, inks and the like, and can also be used to make molded articles including foamed particles of the foamed microspheres (e.g., foaming molded products, foamed coating films, foamed ink). By including foamed particles in the molded article, it is possible to aim for improvement in the cushion properties and lightness of the molded article as well as to impart various types of functionality to said molded article, such as a slip property, an insulation property, a sound insulating property, and the like.

At the time of manufacturing the molded article, utilizing the structure component subjected to heat treatment at a temperature below the foaming initiation temperature of the microspheres, it is preferable that said structure component is subjected to a heat treatment at a temperature greater than or equal to the foaming initiation temperature of the microspheres after having been subjected to said heat treatment. It thereby becomes possible to cause the microspheres to foam with a small amount of heat.

Summary

Thus, as a concrete aspect of the microsphere according to the present invention, provided is a microsphere comprising an outer shell and foaming agent sealed into said shell, wherein: said foaming agent includes a compound that vaporizes and becomes a gas upon being heated, when said microsphere has an average particle size (D50) of A ($\mu$m), the amount of said foaming agent for said microsphere is B1 (mass%), the relationships in Relationships (1) and (2) below are satisfied:

$$\text{Relationship (1):} \quad 60 \leq A \leq 120$$

$$\text{Relationship (2):} \quad B1 \leq -0.14 \times A + 33$$

According to another aspect of the present invention, provided is a microsphere including an outer shell and a foaming agent sealed within said outer shell, wherein: said outer shell is configured of a polymer of a monomer including a polymerizable monomer; said foaming agent includes a compound that vaporizes and becomes a gas upon being heated, when said microsphere has an average particle size (D50) of A ($\mu$m), the amount of said foaming agent for said microsphere is B2 (parts by mass), the relationships in Relationships (4) and (5) below are satisfied:

$$\text{Relationship (4):} \quad 60 \leq A \leq 120$$

$$\text{Relationship (5):} \quad B2 \leq -0.22 \times A + 43$$

where, B2 represents the parts by mass of the foaming agent when the parts by mass of the polymerizable monomer is 100.

According to another aspect of the present invention, provided is a heat-expandable resin composition including the above microspheres and thermoplastic resins.

According to another aspect of the present invention, provided is a structure component of a material that includes at least any one of a polymer and a fiber and has provided therein the microspheres.

According to another aspect of the present invention, provided is a molded article including foamed particles of the above microspheres that have been caused to foam.

According to another aspect of the present invention, provided is a method of manufacturing a structure component prepared with a material with the microspheres in the therein; wherein, the method includes a step of subjecting said microspheres, said microspheres in the state of having been provided in the material, to a heat treatment at a temperature below the foaming initiation temperature of said microsphere.

According to another aspect of the present invention, provided is a method for manufacturing a molded article, said method including a step for subjecting the structure component obtained by the above method for manufacturing a structure component to a heat treatment at a temperature greater than or equal to the foaming initiation temperature of the microspheres after the microspheres have been subjected to the above heat treatment.

According to an aspect and another aspect of the present invention, because the amount of foaming agent has been optimized, even in a case where the microspheres are of an average particle size of 60 µm or greater to 120 or less, the expansion ratio is large, the foaming initiation temperature is high, and the microspheres are difficult to be subject to deflation.

Further, according to the heat-expandable resin composition of another aspect of the present invention, it is possible to provide a heat-expandable resin composition including microspheres such as the above that have an average particle size of 60 µm or greater to 120 µm or less that have a large expansion ratio, a high foaming initiation temperature, and are difficult to be subject to deflation.

Further, according to the structure component and the manufacturing method therefor of another aspect of the present invention, it is possible to provide a structure component including microspheres such as the above that have an average particle size of µm or greater to 120 µm or less that have a large expansion ratio, a high foaming initiation temperature, and are difficult to be subject to deflation.

Further, according to the structure component and the manufacturing method therefor of another aspect of the present invention, it is possible to provide a molded article that has an excellent cushion property and can be made lightweight by including foamed particles of the above microspheres that have been caused to foam.

The present invention is not limited to the embodiments described above, and various modifications are possible within the scope indicated in the claims. Different embodiments obtained by appropriately combining the technical means disclosed by the embodiments are also included in the technical scope of the present invention. Further, by combining the technical means disclosed by the embodiments, new technical features can be formed.

In order to more fully describe the present invention, the following examples are presented and explained, however, the present invention is not limited thereto.

Example 1

(1) Preparation of aqueous dispersion medium

An aqueous dispersion medium was prepared by mixing 210 g of 20 mass% colloidal silica, 9.8 g of 50 mass% diethanolamine-adipic acid condensation product (acid value: 78 mg KOH/g), 0.84 g of sodium nitrite, 1246 g of sodium chloride, and 3982 g of water. Hydrochloric acid was added to this aqueous dispersion medium to adjust the pH to 3.5.

(2) Preparation of polymerizable mixture

A polymerizable mixture was prepared by mixing the respective amounts of: the polymerizable monomers acrylonitrile (938 g), methacrylonitrile (434 g), methyl methacrylate (28 g); the foaming agents of isododecane isomer mixture (315 g), isooctane isomer mixture (63 g), and isopentane isomer mixture (14 g); the crosslinkable monomer ethylene glycol dimethacrylate (15.4 g); and the polymerization initiator 2,2'-azobisisobutyronitrile (16.8 g). The total amount of the foaming agent (amount of charge) was 28 parts by mass per 100 parts by mass of the total amount of the polymerizable monomer.

(3) Suspension polymerization

The above prepared aqueous dispersion medium and polymerizable mixture were stirred and mixed using a homogenizer at a rotational speed of 6000 rpm for 30 seconds to form minute droplets of the polymerizable mixture in the aqueous dispersion medium. The aqueous dispersion medium containing minute droplets of this polymerizable mixture was charged into a polymerization vessel (10 L) equipped with a stirrer and reaction was performed by mixing at a rotational speed of 360 rpm and heating to 60°C for 13.5 hours and then heating at 70°C for 10 hours using a hot water bath. After the polymerization, the slurry containing the produced microspheres was filtered, washed with water, and then dried to obtain microspheres according to Example 1.

Example 2

In Example 2, 259 g of an isododecane isomer mixture, 49 g of an isooctane isomer mixture, and 14 g of an isopentane isomer mixture were used as the foaming agent, and mixed in a homogenizer at a rotational speed of 3500 rpm to achieve suspension, aside from which the microspheres were obtained by the same method as Example 1. The total amount of the foaming agent (amount of charge) was 23 parts by mass per 100 parts by mass of the total amount of the polymerizable monomer.

Example 3

In Example 3, 280 g of an isododecane isomer mixture, 56 g of an isooctane isomer mixture, and 14 g of an isopentane isomer mixture were used as the foaming agent, and mixed in a homogenizer at a rotational speed of 5000 rpm for suspension, aside from which the microspheres were obtained by the same method as Example 1. The total amount of the foaming agent (amount of charge) was 25 parts by mass per 100 parts by mass of the total amount of the polymerizable monomer.

Example 4

In Example 4, 189 g of a 20 mass% colloidal silica, 8.7 g of a 50 mass% of diethanolamine-adipic acid condensation product (acid value: 78 mg KOH/g), and 4002 g of water were mixed with a foaming agent comprising 259 g of an isododecane isomer mixture, 49 g of an isooctane isomer mixture and 14 g of an isopentane isomer mixture in a homogenizer and mixed at a rotational speed of 3500 rpm to achieve suspension, aside from which the microspheres were obtained by the same method as Example 1. The total amount of the foaming agent (amount of charge) was 23 parts by mass per 100 parts by mass of the total amount of the polymerizable monomer.

Example 5

In Example 5, 224 g of an isododecane isomer mixture, 42 g of an isooctane isomer mixture, and 14 g of an isopentane isomer mixture were used as the foaming agent, and mixed in a homogenizer at a rotational speed of 2000 rpm to achieve suspension, aside from which the microspheres were obtained by the same method as Example 1. The total amount of the foaming agent (amount of charge) was 20 parts by mass per 100 parts by mass of the total amount of the polymerizable monomer.

Reference Example

In Reference Example, 224 g of an isododecane isomer mixture, and 196 g of an isooctane isomer mixture were used as the foaming agent, and mixed in a homogenizer at a rotational speed of 7000 rpm for 48 seconds to achieve suspension, aside from which the microspheres were obtained by the same method as Example 1. The total amount of the foaming agent (amount of charge) was 30 parts by mass per 100 parts by mass of the total amount of the polymerizable monomer.

Comparative Example 1

In Comparative Example 1, 392 g of an isododecane isomer mixture, 84 g of an isooctane isomer mixture, and 14 g of an isopentane isomer mixture were used as the foaming agent, aside from which the microspheres were obtained by the same method as Example 2. The total amount of the foaming agent (amount of charge) was 35 parts by mass per 100 parts by mass of the total amount of the polymerizable monomer.

Comparative Example 2

In Comparative Example 2, 336 g of an isododecane isomer mixture, 70 g of an isooctane isomer mixture, and 14 g of an isopentane isomer mixture were used as the foaming agent, aside from which the microspheres were obtained by the same method as Example 2. The total amount of the foaming agent (amount of charge) was 30 parts by mass per 100 parts by mass of the total amount of the polymerizable monomer.

Comparative Example 3

In Comparative Example 3, 280 g of an isododecane isomer mixture, 56 g of an isooctane isomer mixture, and 14 g of an isopentane isomer mixture were used as the foaming agent, aside from which the microspheres were obtained by the same method as Example 5. The total amount of the foaming agent (amount of charge) was 25 parts by mass per 100 parts by mass of the total amount of the polymerizable monomer.

Average Particle Size (D50)

The average particle size (D50) of the microspheres according to each respective Example and Comparative Example was measured. Specifically, first, a slurry of the heat-expandable microspheres was sieved using a sieving net #100 (sieve opening: 150 $\mu$m). In a 20 ml of pure ion-exchanged water, 0.5 g of sieved slurry was dispersed by applying ultrasonic wave for 15 minutes or longer, and this was used as a sample. Then, the average particle size (D50) of the slurry contained in this sample was measured with a particle size analysis apparatus (Sysmex Corporation, Product Number: "FPIA-3000"); wherein, the measurement conditions comprised a total count of 10000 (i.e., the number of imaged particles was 10000).

Foaming agent measurement

The microspheres according to each respective Example and Comparative Example were measured. More specifically, after immersing the microspheres in 0.1 g of N,N-dimethylformamide (DMF), the microspheres were dispersed with ultrasound for 15 minutes, and left standing overnight to prepare a swelling conditioner. The supernatant of said swelling conditioner was measured by carrying out gas chromatography to derive the foaming agent amount of the microspheres.

The gas chromatography analysis conditions were as follows.

Gas chromatograph: Shimadzu Corporation, GC-14B
Detector: FID; Temperature: 200°C
Packed column: Shimadzu GLC Ucon LB-550 X, 10%
Shimalite 80-100 AZ-DMCS
Temperature raising program: 120°C (11 minutes)- 15°C/minute to 180°C(maintained)
Injection port temperature: 200°C
Injection amount: 3 $\mu$L
Assay: Calibration curve method (solution of known amount of sample dissolved in DMF)

Foaming initiation temperature measurement

The foaming initiation temperature of the microspheres according to each respective Example and Comparative Example were measured. Specifically, 0.25 mg of non heat-treated microspheres were placed in a container, and the temperature thereof raised at 5°C/minute using a thermomechanical analysis apparatus (Product Number: "TMA/SDTA840", available from Mettler-Toledo International Inc.), and the displacement of the height thereof was measured continuously. Then, the temperature at which displacement of the height of the microspheres started was taken as the non heat-treated foaming initiation temperature. Further, by the same type of method, the foaming initiation temperature of microspheres that had been subjected to heat treatment for 5 minutes at 150°C was also measured.

Foamed particle density measurement

The microspheres according to each respective Example and Comparative Example were caused to foam, and the respective densities of the foamed particles thereof measured. Specifically, 0.5 g of microspheres and 2.5 g of silicon oil were measured out in an aluminum cup, mixed well and foamed by being heated at 200°C for 5 mi nutes and then removed. N ext, 50 ml thereof was placed in a volumetric flask and diluted therein with isopropanol, and the density of the foamed particles foamed from the weight of the diluted sample obtained. In addition, in a separate measurement, 0.5 g of the microspheres according to each respective Example and Comparative Example were and 2.5 g of silicon oil were measured out in an aluminum cup, mixed well and foamed by being heated at 190°C for 5 minutes and then removed. Next, 50 ml thereof was placed in a volumetric flask and diluted therein with isopropanol, and the density of the foamed particles foamed from the weight of the diluted sample obtained. Note that, the microspheres used in the foamed particle density measurement were microspheres that had been subjected to a heat treatment at 150°C for 5 mi nutes in advance.

The results are shown in Table 1 below.

Table 1

| | | Example 1 | Example 2 | Example 3 | Example 4 | Example 5 | Reference Example | Comparative Example 1 | Comparative example 2 | Comparative example 3 |
|---|---|---|---|---|---|---|---|---|---|---|
| Polymerizable monomer (g) | Acrylonitrile | 67 | 67 | 67 | 67 | 67 | 67 | 67 | 67 | 67 |
| | Methacrylonitrile | 31 | 31 | 31 | 31 | 31 | 31 | 31 | 31 | 31 |
| | Methyl methacrylate | 2 | 2 | 2 | 2 | 2 | 2 | 2 | 2 | 2 |
| | Polymerizable monomer amount (amount of charge) | 100 | 100 | 100 | 100 | 100 | 100 | 100 | 100 | 100 |
| Foaming agent (g) | Isododecane | 22.5 | 18.5 | 20 | 18.5 | 16 | 16 | 28 | 24 | 20 |
| | Isooctane | 4.5 | 3.5 | 4 | 3.5 | 3 | 14 | 6 | 5 | 4 |
| | Isopentane | 1 | 1 | 1 | 1 | 1 | 0 | 1 | 1 | 1 |
| | Total foaming agent amount (amount of charge) | 28 | 23 | 25 | 23 | 20 | 30 | 35 | 30 | 25 |
| Amount of foaming agent (mass%) per microsphere (actual) | | 21.5 | 18.1 | 20.5 | 18.6 | 16.9 | 23.5 | 26.4 | 23.6 | 20.5 |
| Amount (parts by mass) of foaming agent (amount of charge) per 100 parts by mass of the polymerizable monomer | | 28 | 23 | 25 | 23 | 20 | 30 | 35 | 30 | 25 |
| Average particle size (μm) | | 64 | 76 | 77 | 84 | 94 | 49 | 76 | 75 | 96 |
| Foaming initiation temperature (°C) | Non heat-treated | 219 | 206 | 221 | 204 | 223 | 209 | 217 | 212 | 206 |
| | 150°C/5 minutes | 171 | 174 | 170 | 173 | 173 | 169 | 166 | 168 | 168 |
| Foamed particle density (g/ml) | 200°C/5 minutes (R1) | 0.0140 | 0.0156 | 0.0138 | 0.0183 | 0.0202 | 0.0123 | 0.0619 | 0.0243 | 0.0303 |
| | 190°C/5 minutes (R2) | 0.0136 | 0.0150 | 0.0127 | 0.0151 | 0.0186 | 0.0117 | 0.0272 | 0.0165 | 0.0183 |
| R1/R2 | | 1.03 | 1.04 | 1.09 | 1.21 | 1.09 | 1.05 | 2.28 | 1.47 | 1.66 |

EP 3 395 925 B1

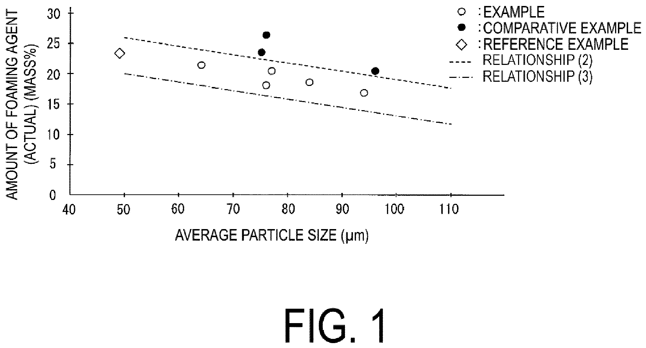

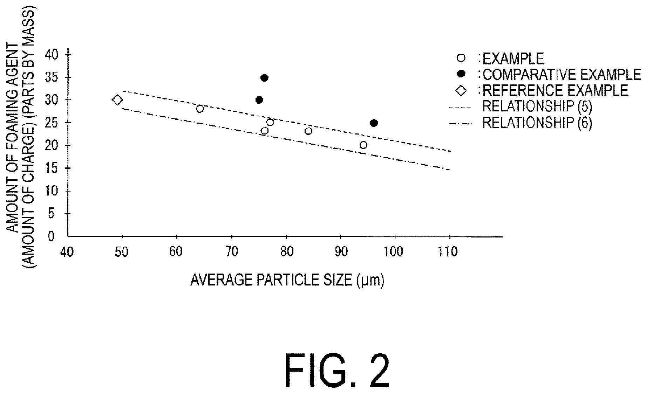

The amounts (actual measurement and amount of charge) of foaming agent contained in the microspheres of Comparative Examples 1 to 3 was excessive with respect to the particle size of the microspheres, so the microspheres did not satisfy Relationship (2) or (5) above (refer to FIG. 1 and FIG. 2). Therefore, although the foaming initiation temperature of the microspheres of Comparative Examples 1 to 3 was high, as can be seen from the value of R1/R2, the microspheres had become deflated, and the expansion ratio thereof was small. Note that, the size of the expansion ratio was determined from the actual density of the foamed particles recorded in the foamed particles density measurement column, said foamed particles having been obtained by foaming the microspheres by heating at 200°C for 5 minutes.

In contrast, the amount (actual measurement and amount of charge) of foaming agent of the microsphere according to Examples 1 to 5 satisfied Relationships (1) and (2) above (refer to FIG. 1), or Relationships (4) and (5) above (refer to FIG. 2), and because the amount of foaming agent was optimized for the average particle size, in the same manner as for the microspheres of the comparative examples having an average particle size of less than 50 $\mu$m, the microspheres have a large expansion ratio, a high foaming initiation temperature, and had been subject to almost no deflation. Therefore, when the foaming agent amount satisfies Relationships (1) and (2) above, or satisfy Relationships (4) and (5) above, it was confirmed that microspheres having a large expansion ratio, a high foaming initiation temperature, and which were difficult to be subject to deflation could be obtained.

Further, although the average particle size of the microspheres according to Example 2 and the microspheres according to Example 3 are almost the same, because the microspheres according to Example 3 have a larger amount of foaming agent than the microspheres according to Example 2, the expansion ratio was large.

**Claims**

1. A microsphere comprising an outer shell and a foaming agent sealed into the outer shell, wherein:

   (i) the foaming agent includes a compound that vaporizes and becomes a gas upon being heated; and when the average particle size (D50) of the microsphere is given as A ($\mu$m) and the amount of the foaming agent for said microsphere as B1 (mass%), relationships in Relationships (1), (2) and (3) are satisfied:

   $$\text{Relationship (1): } 60 \leq A \leq 120$$

   $$\text{Relationships (2) and (3) respectively: } -0.14 \times A + 27 \leq B1 \leq -0.14 \times A + 33$$

   or
   (ii) the outer shell is constructed from a polymer of a monomer including a polymerizable monomer; the foaming agent includes a compound that vaporizes and becomes a gas upon being heated; and when the average particle size (D50) of said microsphere is given as A ($\mu$m) and the amount of the foaming agent for said microsphere as B2 (parts by mass), relationships in Relationships (4), (5) and (6) are satisfied:

   $$\text{Relationship (4): } 60 \leq A \leq 120$$

   $$\text{Relationships (5) and (6) respectively: } -0.22 \times A + 39 \leq B2 \leq -0.22 \times A + 43$$

   where, B2 represents the parts by mass of the foaming agent when the parts by mass of the polymerizable monomer is 100,

   **characterized in that** a density of foamed particles produced when the microspheres are caused to foam is 0.024 g/ml or less, as defined under the heading "foamed particle density measurement" of the examples.

2. The microsphere according to claim 1, wherein the foaming initiation temperature of the microsphere is 200°C or higher, as defined under the heading "foaming initiation temperature measurement" of the examples.

3. The microsphere according to any one of claims 1 or 2, wherein a relationship in Relationship (7) is satisfied:

Relationship (7): R1 / R2 ≤ 1.3

where, R1 is the density of the foamed particles when the microspheres are caused to foam by being subjected to a heat treatment at 200°C for 5 minutes after having subjected the microspheres to a heat treatment at 150°C for 5 minutes, and R2 is the density of the foamed particles when the microspheres are caused to foam by being subjected to a heat treatment at 150°C for 5 minutes after having subjected the microspheres to a heat treatment at 190°C for 5 minutes.

4. The microsphere according to any one of claims 1 to 3, wherein the outer shell is a polymer having (meth)acrylate as a main component thereof.

5. The microsphere according to any one of claims 1 to 4, wherein the outer shell is a polymer of a monomer including a polymerizable monomer formed only of (meth)acrylonitrile and one or more monomer selected from the group consisting of vinylidene chloride, (meth)acrylic ester, styrene, and vinyl acetate.

6. A heat-expandable resin composition comprising:
the microspheres according to any one of claims 1 to 5; and thermoplastic resins.

7. A structure component prepared with a material that includes at least any one of a polymer and a fiber; wherein the microspheres according to any one of claims 1 to 5 are incorporated into the material.

8. A molded article comprising foamed particles obtained by foaming the microspheres according to any one of claims 1 to 5.

9. A method for manufacturing a structure component, the material of which has provided with the microspheres according to any of claims 1 to 5, the method including:
subjecting the microspheres according to any one of claims 1 to 5, said microspheres in the state of having been provided in the material, to a heat treatment at a temperature less than the foaming initiation temperature of said microspheres.

10. A method for manufacturing a molded article, the method including:
subjecting the structure component obtained by the method for manufacturing a structure component according to claim 9 to a heat treatment at a temperature greater than or equal to the foaming initiation temperature of the microspheres according to any of claims 1 to 5, after the microspheres according to any of claims 1 to 5 having been subjected to the above heat treatment.

11. A method for manufacturing a microsphere according to any one of claims 1 to 5, wherein:
in an aqueous dispersion medium containing a dispersion stabilizer, at least one type of polymerizable monomer is suspension polymerized in the presence of a forming agent to obtain a polymer.

**Patentansprüche**

1. Mikrokugel, umfassend eine Außenschale und ein Aufschäummittel, das in der Außenschale verschlossen ist, wobei:

(i) das Aufschäummittel eine Verbindung einschließt, die beim Erhitzen verdampft und zu einem Gas wird; und wenn die mittlere Teilchengröße (D50) der Mikrokugel als A (µm) und die Menge des Aufschäummittels für die Mikrokugel als B1 (Masse-%) angegeben wird, folgende Relationen bei Relation (1), (2) und (3) erfüllt werden:

Relation (1): $60 \leq A \leq 120$

Relation (2) bzw. (3): $-0{,}14 \times A + 27 \leq B1 \leq -0{,}14 \times A + 33$ oder

(ii) die Außenschale aus einem Polymer eines Monomers aufgebaut ist, das ein polymerisierbares Monomer einschließt;

das Aufschäummittel eine Verbindung einschließt, die beim Erwärmen verdampft und zu einem Gas wird; und wenn die mittlere Teilchengröße (D50) der Mikrokugel als A ($\mu$m) und die Menge des Aufschäummittels für die Mikrokugel als B2 (Masseteile) angegeben wird, folgende Relationen bei Relation (4), (5) und (6) erfüllt werden:

$$\text{Relation (4): } 60 \leq A \leq 120$$

$$\text{Relation (5) bzw. (6): } -0{,}22 \times A + 39 \leq B2 \leq -0{,}22 \times A + 43$$

wobei B2 für die Masseteile des Aufschäummittels steht, wenn die Massenteile des polymerisierbaren Monomers 100 betragen,
**dadurch gekennzeichnet, dass** eine Dichte von aufgeschäumten Teilchen, die erzeugt werden, wenn die Mikrokugeln zu Schaum gemacht werden, 0,024 g/ml oder weniger beträgt, wie unter der Überschrift "Messung der Dichte von aufgeschäumten Teilchen" der Beispiele definiert.

2. Mikrokugel nach Anspruch 1, wobei die Aufschäumungsinitiierungstemperatur der Mikrokugel 200 °C oder mehr beträgt, wie unter der Überschrift "Messung der Aufschäumungsinitiierungstemperatur" der Beispiele definiert.

3. Mikrokugel nach einem der Ansprüche 1 oder 2, wobei folgende Relation bei Relation (7) erfüllt wird:

$$\text{Relation (7): } R1 / R2 \leq 1{,}3$$

wobei R1 die Dichte der aufgeschäumten Teilchen ist, wenn die Mikrokugeln zu Schaum gemacht werden, indem sie bei 200 °C einer 5-minütigen Wärmebehandlung unterzogen werden, nachdem die Mikrokugeln bei 150 °C einer 5-minütigen Wärmebehandlung unterzogen worden sind, und R2 die Dichte der aufgeschäumten Teilchen ist, wenn die Mikrokugeln zu Schaum gemacht werden, indem sie bei 150 °C einer 5-minütigen Wärmebehandlung unterzogen werden, nachdem die Mikrokugeln bei 190 °C einer 5-minütigen Wärmebehandlung unterzogen worden sind.

4. Mikrokugel nach einem der Ansprüche 1 bis 3, wobei die Außenschale ein Polymer mit (Meth)acrylat als Hauptbestandteil davon ist.

5. Mikrokugel nach einem der Ansprüche 1 bis 4, wobei die Außenschale ein Polymer aus einem Monomer, das ein polymerisierbares Monomer, das nur aus (Meth)acrylnitril gebildet ist, einschließt, und einem oder mehreren Monomeren ist, die aus der Gruppe ausgewählt sind, bestehend aus Vinylidenchlorid, (Meth)acrylester, Styrol und Vinylacetat.

6. Wärmeausdehnbare Harzzusammensetzung, umfassend:
die Mikrokugeln nach einem der Ansprüche 1 bis 5; und thermoplastische Harze.

7. Strukturbestandteil, der mit einem Material hergestellt wird, das mindestens eines von einem Polymer und einer Faser einschließt; wobei die Mikrokugeln nach einem der Ansprüche 1 bis 5 in das Material integriert werden.

8. Formartikel, umfassend aufgeschäumte Teilchen, die durch Aufschäumen der Mikrokugeln nach einem der Ansprüche 1 bis 5 erhalten werden.

9. Verfahren zum Herstellen eines Strukturbestandteils, dessen Material mit den Mikrokugeln nach einem der Ansprüche 1 bis 5 versehen ist, wobei das Verfahren umfasst: Unterziehen der Mikrokugeln nach einem der Ansprüche 1 bis 5 in dem Zustand, in dem sie in dem Material bereitgestellt wurden, einer Wärmebehandlung bei einer Temperatur, die geringer als die Aufschäumungsinitiierungstemperatur der Mikrokugeln ist.

10. Verfahren zum Herstellen eines Formkörpers, wobei das Verfahren umfasst: Unterziehen des Strukturbestandteils, das durch das Verfahren zum Herstellen eines Strukturbestandteils nach Anspruch 9 erhalten wird, einer Wärmebehandlung bei einer Temperatur, die größer oder gleich der Aufschäumungsinitiierungstemperatur der Mikrokugeln nach einem der Ansprüche 1 bis 5 ist, nachdem die Mikrokugeln nach einem der Ansprüche 1 bis 5 der obigen Wärmebehandlung unterzogen wurden.

11. Verfahren zum Herstellen einer Mikrokugel nach einem der Ansprüche 1 bis 5, wobei:
in einem wässrigen Dispersionsmedium,das einen Dispersionsstabilisator enthält, mindestens eine Art von polymerisierbarem Monomer in Gegenwart eines Aufschäumungsmittels suspensionspolymerisiert wird, um ein Polymer zu erhalten.

**Revendications**

1. Microsphère comprenant une coque externe et un agent moussant scellé dans la coque externe, dans laquelle :

   (i) l'agent moussant inclut un composé qui se vaporise et devient un gaz par chauffage ; et
   lorsque la taille moyenne des particules (D50) de la microsphère est donnée par A ($\mu$m) et que la quantité de l'agent moussant de ladite microsphère par B1 (% en masse), les relations dans Relations (1), (2) et (3) sont satisfaites :

$$\text{Relation (1) : } 60 \leq A \leq 120$$

$$\text{Relations (2) et (3) respectivement : } -0{,}14 \times A + 27 \leq B1 \leq -0{,}14 \times A + 33$$

   ou
   (ii) la coque externe est construite à partir d'un polymère d'un monomère incluant un monomère polymérisable ;

   l'agent moussant inclut un composé qui se vaporise et devient un gaz par chauffage ;
   et lorsque la taille moyenne des particules (D50) de ladite microsphère est donnée par A ($\mu$m) et que la quantité de l'agent moussant de ladite microsphère par B2 (parties en masse), les relations dans Relations (4), (5) et (6) sont satisfaites :

$$\text{Relation (4) : } 60 \leq A \leq 120$$

$$\text{Relations (5) et (6) respectivement : } -0{,}22 \times A + 39 \leq B2 \leq -0{,}22 \times A + 43$$

   où B2 représente les parties en masse de l'agent moussant lorsque les parties en masse du monomère polymérisable s'élèvent à 100.
   **caractérisé en ce qu'**une masse volumique de particules moussées produites lorsque les microsphères sont amenées à mousser est de 0,024 g/ml ou moins, tel que défini dans la rubrique « mesure de masse volumique des particules moussées » des exemples.

2. Microsphère selon la revendication 1, dans laquelle la température d'initiation de moussage de la microsphère est de 200 °C ou plus, telle que définie dans la rubrique « mesure de la température de début de moussage » des exemples.

3. Microsphère selon l'une quelconque des revendications 1 à 2, dans laquelle une relation dans Relation (7) est satisfaite :

$$\text{Relation (7) : } R1 / R2 \leq 1{,}3$$

   où, R1 est la masse volumique des particules moussées lorsque les microsphères sont amenées à mousser en étant soumises à un traitement thermique à 200 °C pendant 5 minutes après avoir soumis les microsphères à un traitement thermique à 150 °C pendant 5 minutes, et R2 est la densité des particules moussées lorsque les microsphères sont amenées à mousser en étant soumises à un traitement thermique à 150 °C pendant 5 minutes après avoir soumis les microsphères à un traitement thermique à 190 °C pendant 5 minutes.

4. Microsphère selon l'une quelconque des revendications 1 à 3, dans laquelle la coque externe est un polymère ayant un (méth)acrylate en tant que composant principal de celui-ci.

5. Microsphère selon l'une quelconque des revendications 1 à 4, dans laquelle la coque externe est un polymère d'un monomère incluant un monomère polymérisable formé uniquement de (méth)acrylonitrile et d'un ou de plusieurs monomères choisis dans le groupe constitué par le chlorure de vinylidène, un ester (méth)acrylique, le styrène et l'acétate de vinyle.

6. Composition de résine expansible à chaud comprenant :
les microsphères selon l'une quelconque des revendications 1 à 5 ; et des résines thermoplastiques.

7. Composant de structure préparé avec un matériau qui comprend au moins l'un quelconque d'un polymère et d'une fibre ; dans lequel les microsphères selon l'une quelconque des revendications 1 à 5 sont incorporées dans le matériau.

8. Article moulé comprenant des particules moussées obtenues par moussage des microsphères selon l'une quelconque des revendications 1 à 5.

9. Procédé de fabrication d'un composant de structure, dont le matériau présente des microsphères selon l'une quelconque des revendications 1 à 5, le procédé comprenant : la soumission des microsphères selon l'une quelconque des revendications 1 à 5, lesdites microsphères dans l'état d'avoir été apportées dans le matériau, à un traitement thermique à une température inférieure à la température d'initiation de moussage desdites microsphères.

10. Procédé de fabrication d'un article moulée, le procédé comprenant : soumettre le composant de structure obtenu par la méthode de fabrication d'un composant de structure selon la revendication 9 à un traitement thermique à une température supérieure ou égale à la température d'initiation de moussage des microsphères selon l'une quelconque des revendications 1 à 5, après que les microsphères selon l'une quelconque des revendications 1 à 5 ont été soumises au traitement thermique ci-dessus.

11. Procédé de fabrication d'une microsphère selon l'une quelconque des revendications 1 à 5, dans lequel :
dans un milieu de dispersion aqueuse contenant un stabilisant de dispersion, au moins un type de monomère polymérisable est polymérisé en suspension en présence d'un agent de formation pour obtenir un polymère.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013212432 A
- WO 2006030946 A1
- WO 2013178561 A2